# FASCICULE DE BREVET EUROPEEN

(11) **EP 3 995 353 B1**
(45) Date de publication et mention de la délivrance du brevet: **07.06.2023**
(21) Numéro de dépôt: 21206854.8
(22) Date de dépôt: 08.11.2021
(51) Int. Cl.: B60M 1/02, B60M 1/04, H01R 11/14, H02G 1/02

(54) **SYSTÈME ET PROCÉDÉ DE RACCORDEMENT ÉLECTRIQUE TEMPORAIRE D'UNE CATÉNAIRE À UN RAIL DE CIRCULATION D'UNE VOIE FERRÉE**
SYSTEM UND VERFAHREN ZUR VORÜBERGEHENDEN ELEKTRISCHEN VERBINDUNG EINER OBERLEITUNG MIT EINER FAHRSCHIENE EINES EISENBAHNGLEISES
SYSTEM AND METHOD FOR TEMPORARY ELECTRICAL CONNECTION OF A CATENARY TO A CIRCULATION RAIL OF A RAILWAY TRACK

(30) Priorité: 10.11.2020 FR 2011525
(43) Date de publication de la demande: 11.05.2022
(73) Titulaire: SNCF Voyageurs, 93200 Saint-Denis (FR)
(72) Inventeur: BONNEAUD, Thierry, 60140 MOGNEVILLE (FR); DANGLER, Jean-Luc, 67170 ROTTELSHEIM (FR); OBJOIS, Eric, 80440 THEZY GLIMONT (FR)
(74) Mandataire: Argyma

(56) Documents cités:
- EP-A1- 3 351 454
- CN-A- 108 110 584
- DE-U1-202016 106 692
- FR-A1- 2 749 439
- FR-A1- 3 041 821

## Description

### DOMAINE TECHNIQUE

La présente invention concerne le domaine de la sécurisation électrique au cours d'une opération de maintenance ferroviaire. L'invention vise en particulier un système de raccordement à la terre d'une caténaire d'une voie ferrée.

De manière classique, une voie ferrée comporte des rails de circulation longitudinaux qui reposent au sol et sont destinés à être en contact avec les roues d'un véhicule ferroviaire, et une ligne électrique aérienne, suspendue au-dessus des rails de circulation et destinée à être en contact avec un pantographe d'un véhicule ferroviaire pour l'alimenter électriquement. Lors de la circulation du véhicule ferroviaire, le courant capté dans la ligne aérienne alimente le véhicule ferroviaire puis circule dans les rails de circulation. Une telle ligne électrique est connue sous la désignation de caténaire.

En vue d'effectuer une opération de maintenance du matériel ferroviaire, il est nécessaire de sécuriser électriquement la voie ferrée pour garantir la sécurité des opérateurs de maintenance. Pour cela, l'alimentation électrique de la (ou des) caténaire(s) de la voie ferrée concernée par l'opération de maintenance est coupée. Autrement dit, la caténaire est mise hors tension par une opération connue de l'homme du métier et réalisée via un sectionneur ou une clé dédiée. Cependant, il persiste un risque électrique dû par exemple à l'apparition de courants induits ou de courts-circuits liés aux caténaires alimentées sur les voies adjacentes. Aussi, de manière connue, la caténaire de la voie ferrée concernée par l'opération de maintenance doit être temporairement reliée à la terre pour s'affranchir de tout risque électrique.

De manière connue, pour raccorder une caténaire à la terre, celle-ci est connectée à un rail de circulation de la voie ferrée, par l'intermédiaire d'un câble électrique reliant électriquement la caténaire et le rail de circulation. Pour connecter le câble électrique à la caténaire, il est connu d'utiliser une perche dite « perche de mise au rail ».

En référence à la figure 1, il est représenté une perche de mise au rail 100, par exemple connue du document FR2749439, qui comprend un corps télescopique 101, une extrémité de connexion 102 (communément désignée tête de perche) présentant la forme d'un crochet destiné à être relié à la caténaire C, et un câble électrique 103 conducteur, fixé d'une part à l'extrémité de connexion 102, de manière à venir en contact de la caténaire C, et relié d'autre part au rail de circulation R. La perche de mise au rail 100 permet ainsi de réaliser une liaison équipotentielle entre la caténaire C et le rail de circulation R.

De manière connue, l'opérateur se saisit de la perche 100 et doit la soulever puis la basculer pour la mettre dans une position verticale de manière à placer l'extrémité de connexion 102 au contact de la caténaire C de manière à connecter électriquement le câble électrique 103 à la caténaire C.

En pratique, le corps télescopique possède une longueur importante pour atteindre la caténaire et doit être suffisamment rigide et solide afin de supporter le câble électrique. Il en résulte que le corps télescopique possède une masse importante. De manière globale, la masse de la perche est élevée du fait des masses élevées du corps télescopique et du câble électrique.

Ainsi, la mise en place de la perche est complexe, contraignante et augmente la pénibilité de l'opérateur. En effet, la longueur de la perche induit un porte-à-faux important pour l'opérateur lors de sa manipulation. De plus, le câble électrique flottant peut s'enrouler autour du corps télescopique pendant sa manipulation, ce qui peut gêner l'opérateur.

Le stockage d'une telle perche de l'art antérieur présente également un inconvénient important. En effet, en vue d'une opération de maintenance et avant sa mise en place, la perche est souvent simplement posée sur le sol dans une zone de passage, ce qui présente un risque qu'un opérateur trébuche sur la perche télescopique ou le câble flottant.

L'invention vise ainsi à éliminer au moins certains de ces inconvénients en proposant un système de raccordement électrique temporaire d'une caténaire fiable et sécurisé permettant de relier électriquement une caténaire à un rail de circulation d'une voie ferrée en limitant la pénibilité des opérateurs tout en garantissant leur sécurité.

De manière incidente, on connait dans l'art antérieur par les documents CN108110584, EP3351454 et FR3041821 des systèmes de raccordement électrique temporaire d'une caténaire à un rail d'une voie ferrée. Le document DE202016106692 décrit également un dispositif pour la mise à la terre d'une ligne haute tension. Les documents de l'art antérieur ne permettent ni une liaison précise à distance du système de raccordement à la caténaire, ni de s'assurer d'un système sécurisé lorsque celui-ci n'est pas utilisé.

### PRESENTATION DE L'INVENTION

L'invention concerne un système de raccordement électrique temporaire d'une caténaire à un rail de circulation d'une voie ferrée, le système de raccordement comprenant :
- un pied de support s'étendant verticalement selon un axe Z,
- un bras de liaison comprenant une extrémité de connexion électrique configurée pour être reliée mécaniquement à la caténaire et une extrémité de fixation reliée au pied de support par un mécanisme d'orientation, le bras de liaison étant configuré pour évoluer au moins entre une position de repos et une position de raccordement à la caténaire, et
- un câble électrique relié d'une part à l'extrémité de connexion du bras de liaison et configuré pour être relié d'autre part au rail de circulation d'une voie ferrée.

Le système de raccordement est remarquable en ce que le mécanisme d'orientation est configuré pour régler la position angulaire du bras de liaison autour de l'axe Z de manière à positionner l'extrémité de connexion au-dessus de la caténaire et pour régler la position verticale du bras de liaison afin de déconnecter/connecter l'extrémité de connexion à la caténaire.

Le système de raccordement selon l'invention est sécurisé et permet à un opérateur de manipuler l'extrémité de connexion électrique à distance, ce qui limite tout risque électrique lors d'une intervention, telle qu'une opération de maintenance par exemple. Une manipulation à distance permet également à l'opérateur d'avoir une bonne visibilité de la caténaire, ce qui facilite le raccordement de l'extrémité de connexion.

Le système de raccordement limite également la pénibilité de l'opérateur qui n'est pas contraint de porter une perche de mise à la terre et de la raccorder manuellement à une caténaire située à plusieurs mètres de hauteur. Un perchage assisté tel que réalisé grâce au système de raccordement selon l'invention permet de limiter les risques ou les approximations liées à un raccordement manuel.

Grâce au mécanisme d'orientation, l'extrémité de connexion est positionnée avec précision sur la caténaire, ce qui limite le risque d'un décrochage intempestif et permet d'augmenter la sécurité du système de raccordement et de l'intervention.

De plus, lorsque l'extrémité de connexion n'est pas reliée à la caténaire, le bras de liaison est stocké dans une position de repos qui permet de maintenir mécaniquement l'extrémité de connexion à distance de l'opérateur même lorsque le système de raccordement n'est pas utilisé. Le système de raccordement ne gêne pas les opérateurs qui interviennent à proximité, à la différence du système de l'art antérieur qui était simplement posé sur le sol.

De manière préférée, le mécanisme d'orientation comprend une structure principale reliée au pied de support par l'intermédiaire d'une pluralité de bielles articulées de manière à permettre une translation circulaire de la structure principale par rapport au pied de support. Une liaison par des bielles permet la translation du bras de liaison selon l'axe Z permettant de connecter et déconnecter l'extrémité de connexion par un mécanisme simple, manipulable à distance. De plus, une translation circulaire permet de faire évoluer le bras de liaison entre deux positions à des hauteurs différentes tout en éloignant le bras de liaison du pied de support au cours de l'opération, ce qui permet de limiter tout risque de choc entre les deux parties du système de raccordement, limitant ainsi l'usure et la détérioration du système de raccordement et augmente sa durée de vie. L'effort de pression est avantageusement progressif lors de l'accostage.

Dans une forme de réalisation préférée, le bras de liaison s'étendant selon un axe de bras et comprenant un corps principal relié au mécanisme d'orientation, un dispositif de raccordement comportant l'extrémité de connexion, et un dispositif de réglage reliant le dispositif de raccordement au corps principal, le bras de liaison comporte des premiers moyens de réglage de l'écartement axial du dispositif de raccordement par rapport au dispositif de réglage selon l'axe de bras.

De manière préférée, le bras de liaison comporte des deuxièmes moyens de réglage de la position angulaire du dispositif de réglage par rapport au corps principal, de manière à modifier l'inclinaison du bras de liaison. Les deuxièmes moyens de réglage permettent ainsi de s'assurer que le bras de liaison est bien orthogonal à la caténaire dans la position de raccordement.

Grâce aux moyens de réglage du système de raccordement, l'extrémité de connexion est positionnée de manière précise par rapport à la caténaire, de manière à garantir son raccordement.

Dans une forme de réalisation préférée, le mécanisme d'orientation comprend une première butée, configurée pour bloquer le bras de liaison dans la position de raccordement, de préférence dans laquelle le bras de liaison s'étend orthogonalement à la caténaire. La première butée permet ainsi de limiter la rotation du bras de liaison, permettant de s'assurer que le bras de liaison est bien orthogonal à la caténaire dans la position de raccordement, de manière à s'assurer d'un raccordement efficace de l'extrémité de connexion sur la caténaire.

De manière préférée, le mécanisme d'orientation comprend une deuxième butée, configurée pour bloquer le bras de liaison dans la position de repos. La deuxième butée permet avantageusement de limiter les risques d'une rotation intempestive du bras de liaison autour du pied de support lorsque le bras de liaison est dans la position de repos, dans laquelle il n'est pas utilisé. Le système de raccordement est ainsi totalement sécurisé même lorsqu'il n'est pas raccordé à la caténaire.

De manière préférée, le mécanisme d'orientation comprend un premier organe de préhension, à hauteur d'homme, configuré pour régler la position verticale du bras de liaison afin de connecter/déconnecter l'extrémité de connexion à la caténaire. Le premier organe de préhension permet un réglage à distance de la hauteur du bras de liaison et donc de l'extrémité de connexion permettant à la fois de sécuriser le système de raccordement vis-à-vis de l'opérateur tout en limitant la pénibilité de ce dernier.

Dans une forme de réalisation préférée, le mécanisme d'orientation comprend un deuxième organe de préhension, à hauteur d'homme, configuré pour régler la position angulaire du bras de liaison autour de l'axe Z. Le deuxième organe de préhension permet une manipulation à distance du bras de liaison en rotation autour de l'axe formée par le pied de support et donc de l'extrémité de connexion permettant à la fois de sécuriser le système de raccordement vis-à-vis de l'opérateur tout en limitant la pénibilité de ce dernier.

Dans une forme de réalisation, le deuxième organe de préhension comprend un organe de verrouillage, configuré pour verrouiller le bras de liaison dans la position de repos et dans la position de raccordement.

De manière préférée, le pied de support se présentant sous la forme d'une poutre creuse, le câble électrique est monté, au moins en partie, à l'intérieur du pied de support, de manière à limiter les risques d'un câble flottant qui pourrait bouger de manière intempestive. De manière avantageuse, le câble électrique est alors protégé, ce qui limite tout endommagement et augmente sa durée de vie. Un câble électrique traversant le pied de support permet également de limiter le risque que le câble électrique ne soit entrainé par exemple par le vent et qu'il ne gêne l'opérateur au cours de l'opération de maintenance par exemple. La sécurité de l'opérateur est ainsi accrue.

De préférence, le pied de support présente une longueur comprise entre 2500 et 7000 mm, suivant s'il est positionné au sol ou sur une structure rapportée (par exemple une passerelle d'accès), ce qui permet au bras de liaison d'être positionné à hauteur de la caténaire tout en permettant son installation sur une structure existante (dans un centre technique de maintenance par exemple).

De manière préférée, le bras de liaison présente une longueur comprise entre 2500 et 4500 mm, ce qui permet à l'extrémité de connexion d'être mise en contact de la caténaire tout en étant manipulée à distance par l'opérateur, limitant tout risque lors de l'opération.

L'invention concerne également un procédé de raccordement électrique temporaire d'une caténaire à un rail de circulation d'une voie ferrée, le procédé étant réalisé au moyen du système de raccordement tel que décrit précédemment, le pied de support s'étendant verticalement selon l'axe Z, étant fixe par rapport à la caténaire, le bras de liaison étant initialement dans la position de repos dans laquelle il n'est pas situé au droit de la caténaire, le câble électrique étant relié au rail de circulation d'une voie ferrée.

Le procédé comprend :
- une étape de rotation du bras de liaison autour de l'axe Z, de manière à positionner l'extrémité de connexion du bras de liaison au droit de la caténaire, de manière à aligner verticalement l'extrémité de connexion et la caténaire, et
- une étape de translation du bras de liaison selon l'axe Z, de manière à mettre en contact l'extrémité de connexion et la caténaire.

Dans une forme de réalisation préférée, le procédé de raccordement comprend postérieurement à l'étape de translation, une étape de verrouillage du bras de liaison dans la position de raccordement.

De manière préférée, le procédé comprend précédemment à l'étape de rotation, une étape de déverrouillage du bras de liaison de la position de repos.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
[Fig. 1] La figure 1 est une représentation schématique d'une perche de mise au rail selon l'art antérieur ;
[Fig. 2] La figure 2 est une représentation schématique d'un système de raccordement d'une caténaire à un rail de circulation d'une voie ferrée selon l'invention ;
[Fig. 3] La figure 3 est une représentation schématique du système de raccordement de la figure 2 selon une première forme de réalisation de l'invention ;
[Fig. 4] La figure 4 est une représentation schématique d'une partie du bras de liaison du système de raccordement de la figure 3 ;
[Fig. 5A]

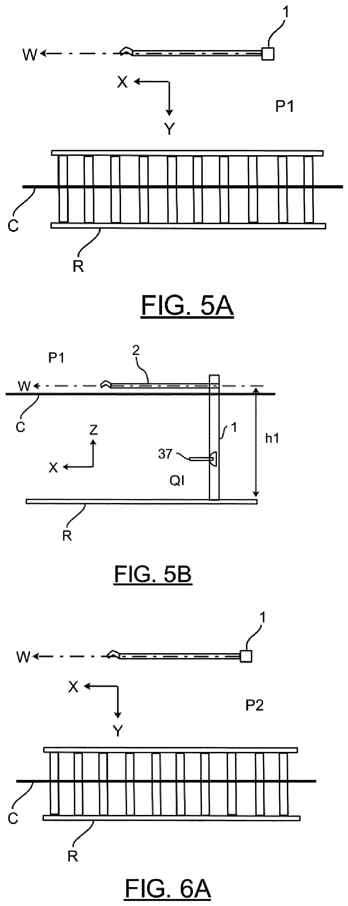

[Fig. 5B] Les figures 5A et 5B sont des représentations schématiques, respectivement dans les plans (X, Y) et (X, Z), du système de raccordement dans la position de repos ;
[Fig. 6A]

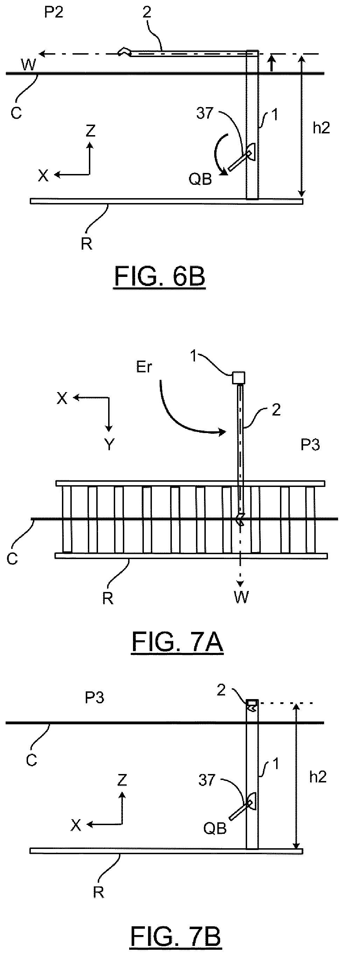

[Fig. 6B] Les figures 6A et 6B sont des représentations schématiques, respectivement dans les plans (X, Y) et (X, Z), du système de raccordement dans la position de déblocage ;
[Fig. 7A]
[Fig. 7B] Les figures 7A et 7B sont des représentations schématiques, respectivement dans les plans (X, Y) et (X, Z), du système de raccordement dans la position d'indexage ;
[Fig. 8A]

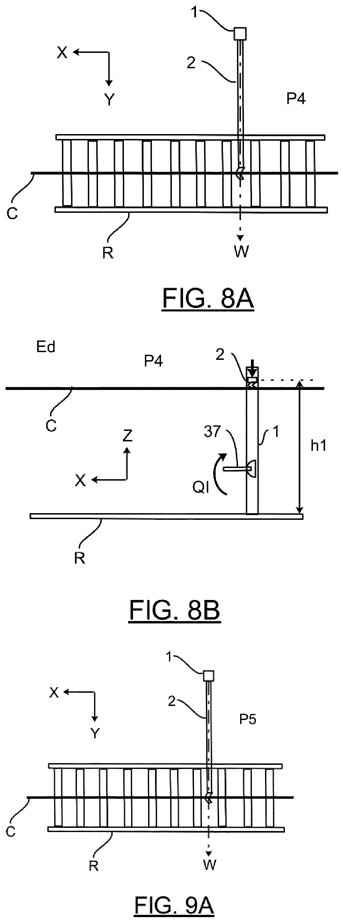

[Fig. 8B] Les figures 8A et 8B sont des représentations schématiques, respectivement dans les plans (X, Y) et (X, Z), du système de raccordement dans la position d'accostage ;
[Fig. 9A]

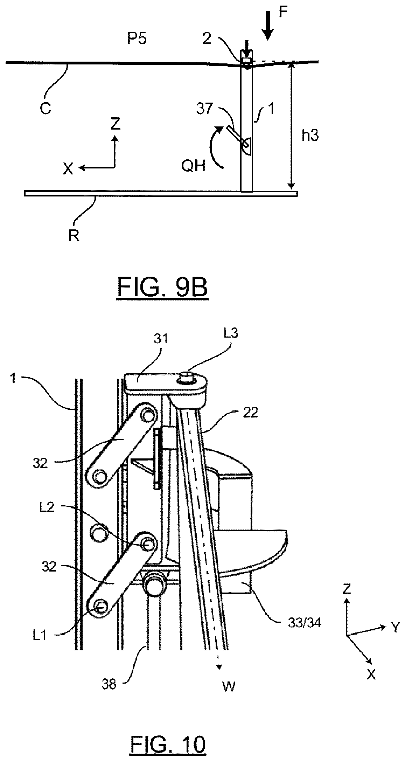

[Fig. 9B] Les figures 9A et 9B sont des représentations schématiques, respectivement dans les plans (X, Y) et (X, Z), du système de raccordement dans la position de raccordement ;
[Fig. 10]

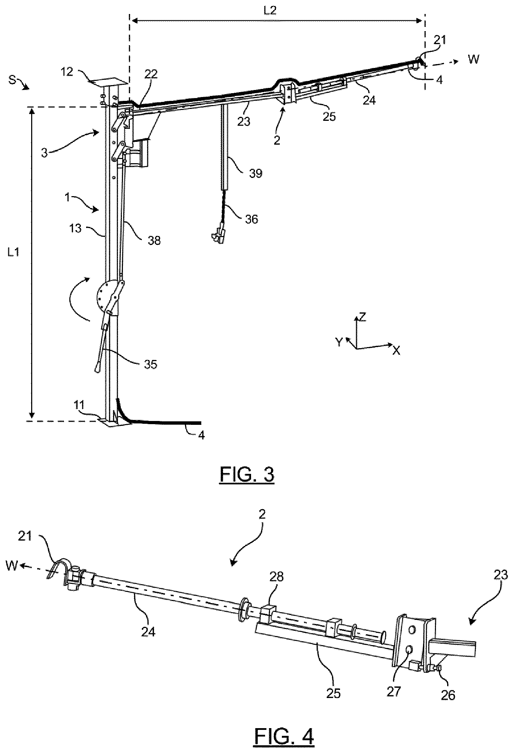

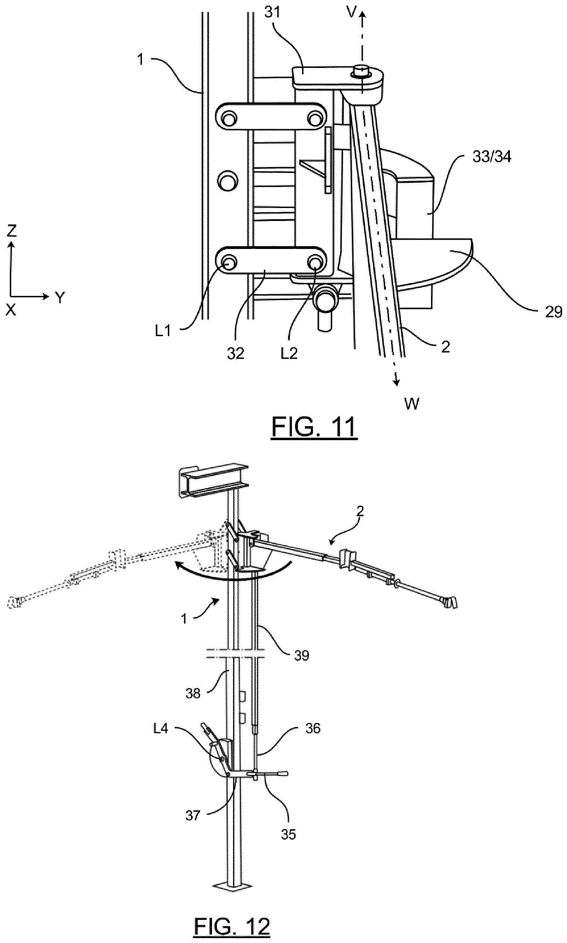

[Fig. 11] Les figures 10 et 11 sont des représentations schématiques d'une forme de réalisation d'un mécanisme d'orientation du système de raccordement de la figure 3 ;
[Fig. 12] La figure 12 est une représentation schématique d'un système de raccordement selon une deuxième forme de réalisation de l'invention ;

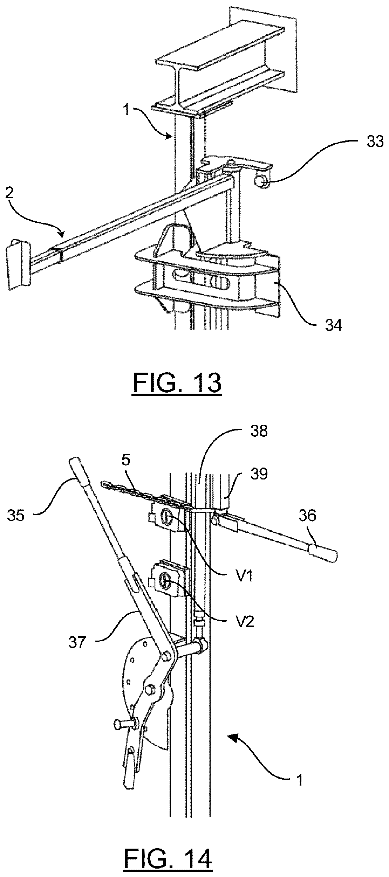

[Fig. 13] La figure 13 est une représentation schématique rapprochée de butées d'un mécanisme d'orientation du système de raccordement de la figure 12 ;
[Fig. 14] La figure 14 est une représentation schématique du positionnement d'un levier du mécanisme d'orientation du système de raccordement de la figure 12 dans une position haute ;

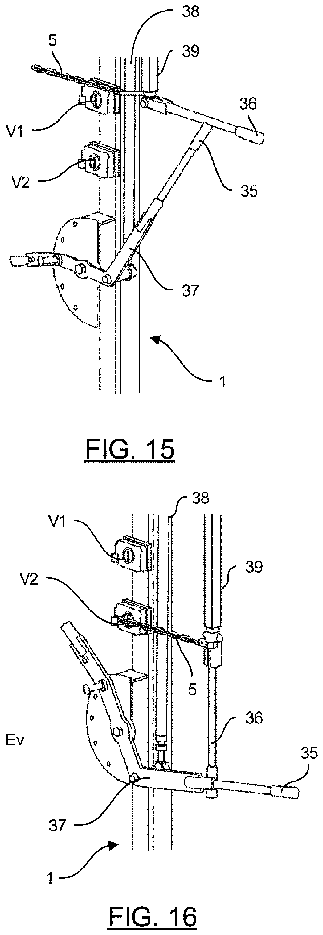

[Fig. 15] La figure 15 est une représentation schématique du positionnement du levier du mécanisme d'orientation du système de raccordement de la figure 12 dans une position intermédiaire ;
[Fig. 16] La figure 16 est une représentation schématique du positionnement du levier du mécanisme d'orientation du système de raccordement de la figure 12 dans une position basse ;

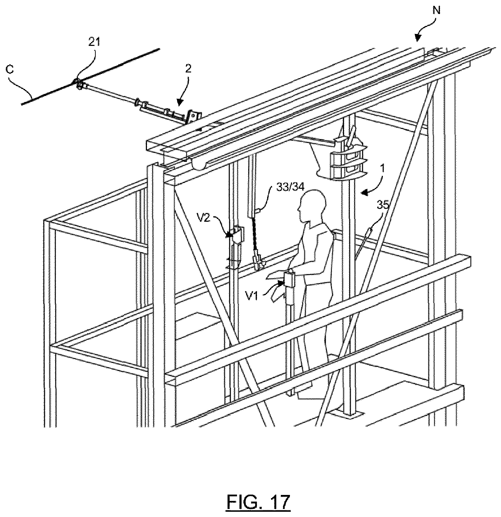

[Fig. 17] La figure 17 est une représentation schématique d'une structure d'élévation et de sécurisation d'un opérateur portant le système de raccordement de la figure 3.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention concerne un système de raccordement électrique temporaire d'une caténaire à un rail de circulation d'une voie ferrée, afin de relier la caténaire à la terre et sécuriser électriquement une opération de maintenance par exemple.

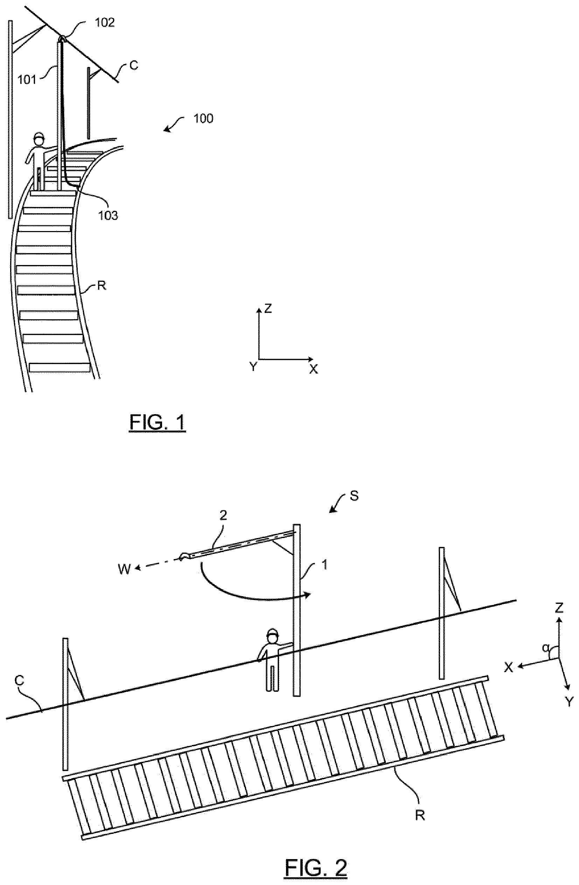

Comme décrit précédemment, en référence à la figure 2, une voie ferrée comporte des rails de circulation R longitudinaux qui reposent au sol et une caténaire C, suspendue au-dessus des rails de circulation R.

Par souci de clarté, comme représenté sur la figure 2, le système de raccordement S selon l'invention est décrit, dans cet exemple, par rapport à son positionnement par rapport aux rails de circulation R. Chaque rail de circulation R de la voie ferrée s'étend dans un repère (X, Y, Z), longitudinalement selon l'axe X, transversalement selon l'axe Y et verticalement selon l'axe Z. De manière analogue, la caténaire C de la voie ferrée s'étend longitudinalement selon l'axe X. De manière connue, la caténaire C est suspendue au-dessus des rails de circulation R à une hauteur de 6500 mm suivant l'axe Z. Par la suite, le système de raccordement S selon l'invention est décrit par rapport au repère (X, Y, Z), dans lequel le plan (X, Y) est orthogonal à l'axe Z. Dans ce document, on entend par le terme « orthogonal », que l'angle α formé entre le plan (X, Y) et l'axe Z vertical est compris entre 80 et 100°.

Le système de raccordement S selon l'invention comprend un pied de support 1, un bras de liaison 2, un mécanisme d'orientation 3 du bras de liaison 2 par rapport au pied de support 1 et un câble électrique 4.

En référence aux figures 2 et 3, le pied de support 1 s'étend longitudinalement verticalement selon l'axe Z entre une extrémité inférieure 11 et une extrémité supérieure 12. L'extrémité inférieure 11 est configurée pour être reliée mécaniquement au sol (comme représenté sur la figure 2) ou à une structure rapportée (comme représenté par exemple sur la figure 17). L'extrémité supérieure 12 est configurée pour être reliée mécaniquement à une structure fixe par exemple en gare ou sous un pont, ou bien à la structure rapportée, par exemple une plateforme ou une passerelle d'accès. Il va de soi que le pied de support 1 pourrait n'être retenu que par son extrémité inférieure 11.

Le pied de support 1 comprend un corps longitudinal 13 qui s'étend entre l'extrémité inférieure 11 et l'extrémité supérieure 12, comme représenté sur la figure 3. De préférence, le corps longitudinal 13 présente une longueur L1 comprise entre 2500 et 7000 mm, de manière à atteindre la hauteur de la caténaire C. De préférence, le corps longitudinal 13 se présente sous la forme d'une poutre métallique creuse afin d'être rigide et solide, tout en présentant une masse limitée.

Toujours en référence aux figures 2 et 3, le bras de liaison 2 s'étend longitudinalement selon un axe de bras W, orthogonal au pied de support 1, et évolue entre différentes positions angulaires (représentées sur les figures 5A à 9B) autour de l'axe Z, c'est-à-dire dans le plan (X, Y), orthogonal à l'axe Z.

Le bras de liaison 2 présente une longueur L2 de préférence comprise entre 2500 et 4500 mm, de manière à déporter le pied de support 1 par rapport à la caténaire C, permettant ainsi une intervention à distance et donc une intervention sécurisée pour l'opérateur.

En référence à la figure 3, le bras de liaison 2 comprend une extrémité de connexion 21 électriquement conductrice configurée pour être reliée mécaniquement à la caténaire C et une extrémité de fixation 22 reliée mécaniquement au pied de support 1 par le mécanisme d'orientation 3, qui sera décrit plus en détails par la suite.

Dans une forme de réalisation préférée, l'extrémité de connexion 21 se présente sous la forme d'un crochet, de manière à pouvoir accoster la caténaire C et à pouvoir rester au contact avec celle-ci même lorsque la caténaire C bouge par exemple sous l'effet du vent. De préférence, l'extrémité de connexion 21 est réalisée dans un matériau électriquement conducteur. Dans une forme réalisation de l'invention, l'extrémité de connexion 21 se présente sous la forme d'une tête de perche connue de l'homme du métier.

Dans une forme de réalisation préférée, toujours en référence à la figure 3, le bras de liaison 2 comprend un corps principal 23 relié mécaniquement au mécanisme d'orientation 3 par l'extrémité de fixation 22, un dispositif de raccordement 24 et un dispositif de réglage 25 reliant le dispositif de raccordement 24 au corps principal 23. Le dispositif de réglage 25 permet de régler la position du dispositif de raccordement 24 par rapport au corps principal 23, comme cela sera décrit plus en détail par la suite.

De préférence, le corps principal 23 comprend l'extrémité de fixation 22 et s'étend selon l'axe de bras W, c'est-à-dire dans le plan (X, Y) orthogonalement au pied de support 1.

Le dispositif de raccordement 24 se présente de préférence sous la forme d'une perche de mise à la terre semblable à une perche de l'art antérieur mais de longueur réduite, s'étendant entre une portion aval reliée mécaniquement au corps principal 23 par l'intermédiaire du dispositif de réglage 25 et une portion amont libre. La portion amont comprend l'extrémité de connexion 21, destinée à être en contact avec la caténaire C. Dans cet exemple, le corps principal 23 permet de déporter axialement le dispositif de raccordement 24 par rapport au pied de support 1 et donc l'extrémité de connexion 21 du pied de support 1.

Le dispositif de réglage 25 relie le dispositif de raccordement 24 au corps principal 23. Dans une forme de réalisation, comme représenté sur la figure 4, le dispositif de réglage 25 comprend des premiers moyens de réglage 28, se présentant sous la forme de chapes, afin de régler la position axiale, suivant l'axe de bras W, du dispositif de raccordement 24 et de l'immobiliser. De manière préférée, les premiers moyens de réglage 28 permettent de positionner le dispositif de raccordement 24 au plus proche de la caténaire C. Un tel réglage est de préférence réalisé lors du montage du système de raccordement S.

Toujours en référence à la figure 4, le bras de liaison 2 selon l'invention comprend des deuxièmes moyens de réglage 26, 27 de la position angulaire du dispositif de réglage 25 par rapport au corps principal 23, de manière à modifier l'inclinaison du bras de liaison 2. Dans cet exemple, le dispositif de réglage 25 est relié au corps principal 23 par des articulations 27 d'axe Y afin de modifier l'inclinaison du bras de liaison 2. Le corps principal 23 comporte des vis de réglage 26 de manière à permettre de modifier l'écartement angulaire entre le dispositif de réglage 25 et le corps principal 23. Les deuxièmes moyens de réglage 26, 27 permettent ainsi d'ajuster avec précision la position verticale de l'extrémité de connexion 21 par rapport à la caténaire C. Un tel réglage est de préférence réalisé lors du montage du système de raccordement S.

Il va de soi que les moyens de réglage 26, 27, 28 pourraient se présenter sous une forme différente.

Le bras de liaison 2 selon l'invention évolue par rapport au pied de support 1 entre une position de repos P1 (représentée sur les figures 5A et 5B), dans laquelle le bras de liaison 2 n'est pas en contact avec la caténaire C et une position de raccordement P5 (représentée sur les figures 9A et 9B), dans laquelle le bras de liaison 2 est comprimé contre la caténaire C afin de permettre une connexion électrique optimale au cours du temps. Plus précisément, dans cet exemple, le bras de liaison 2 évolue dans les plans (X, Y) et (X, Z), suivant différentes positions angulaires et différentes positions verticales, entre :
- la position de repos P1 (figures 5A et 5B), dans laquelle le bras de liaison 2 est, dans une forme de réalisation préférée, bloqué dans une position angulaire sensiblement parallèle à la caténaire C (également représentée sur la figure 2),
- une position de déblocage P2 (figures 6A et 6B), dans laquelle le bras de liaison 2 est débloqué suivant l'axe Z et peut pivoter autour du pied de support 1 dans le plan (X, Y),
- une position d'indexage P3 (figures 7A et 7B), dans laquelle le bras de liaison 2 est positionné orthogonalement à la caténaire C au-dessus de celle-ci suivant l'axe Z,
- une position d'accostage P4 (figures 8A et 8B), dans laquelle le bras de liaison 2 est orthogonal à la caténaire C et en contact avec celle-ci, une telle position étant de préférence vérifiée visuellement par l'opérateur, et
- la position de raccordement P5 (figure 9A et 9B), dans laquelle le bras de liaison 2 est orthogonal à la caténaire C et comprimé contre celle-ci. Dans cet exemple, le bras de liaison 2 est configuré pour appliquer sur la caténaire C un effort de compression F de préférence compris entre 80 et 140 N.

Le mécanisme d'orientation 3 du bras de liaison 2 permet de régler la position angulaire du bras de liaison 2 par rapport au pied de support 1 autour de l'axe Z ainsi que la position verticale du bras de liaison 2 suivant l'axe Z pour positionner le bras de liaison 2 dans les différentes positions P1-P5 décrites ci-dessus.

Le réglage de la position angulaire du bras de liaison 2 par rapport au pied de support 1 autour de l'axe Z permet de faire évoluer le bras de liaison 2 entre la position de déblocage P2, dans laquelle l'extrémité de connexion 21 n'est pas positionnée au droit de la caténaire C, et la position d'indexage P3, dans laquelle l'extrémité de connexion 21 est positionnée au droit de la caténaire C, au-dessus de celle-ci. Comme cela est représenté sur les figures 5A à 6B, lorsque le bras de liaison 2 se trouve dans la position de repos P1 ou dans la position de déblocage P2, le bras de liaison 2 est sensiblement parallèle à la caténaire C. A l'inverse, comme cela est représenté sur les figures 7A à 9B, lorsque le bras de liaison 2 se trouve dans la position d'indexage P3, dans la position d'accostage P4 ou dans la position de raccordement P5, le bras de liaison 2 est sensiblement orthogonal à la caténaire C. Autrement dit, le mécanisme d'orientation 3 permet de faire pivoter le bras de liaison 2 autour de l'axe Z du pied de support 1 de préférence d'un angle compris entre 0 à 90°.

Le réglage de la position verticale suivant l'axe Z du bras de liaison 2 permet à la fois de bloquer le bras de liaison 2 dans la position de repos P1 de manière à limiter une rotation intempestive du bras de liaison 2 autour du pied de support 1, et de connecter/déconnecter l'extrémité de connexion 21 de la caténaire C.

Comme cela est représenté sur les figures 5B, 6B, 7B, 8B et 9B, le bras de liaison 2 évolue dans cet exemple selon l'axe Z entre une première hauteur h1 (correspondant à la hauteur du bras de liaison 2 lorsque ce dernier est placé dans la position de repos P1 et la position d'indexation P3), une deuxième hauteur h2 (correspondant à la hauteur du bras de liaison 2 lorsque ce dernier est placé dans la position de déblocage P2 et dans la positon d'accostage P4) et une troisième hauteur h3 (correspondant à la hauteur du bras de liaison 2 lorsque ce dernier est placé dans la position de raccordement P5). Par souci de simplicité, ce document présente une première hauteur h1 du bras de liaison 2 similaire pour la position de repos P1 et la position d'indexation P3 et une deuxième hauteur h2 similaire pour la position de déblocage P2 et dans la positon d'accostage P4, cependant il va de soi que le bras de liaison 2 pourrait tout aussi bien évoluer entre cinq hauteurs différentes, une hauteur pour chaque position P1-P5 du bras de liaison 2.

Dans une forme de réalisation préférée, comme représenté sur les figures 10 et 11, le mécanisme d'orientation 3 comprend une structure principale 31 présentant dans le plan (Y, Z) une forme en U. Dans cet exemple, la structure principale 31 s'étend longitudinalement selon l'axe Z et latéralement de part et d'autre de l'extrémité de fixation 22 du bras de liaison 2. La structure principale 31 est reliée au pied de support 1 par une pluralité de bielles articulées 32 de manière à permettre une translation circulaire de la structure principale 31 par rapport au pied de support 1. La structure principale 31 est en outre articulée avec le bras de liaison 2 de manière à permettre la rotation du bras de liaison 2 autour de l'axe Z. De préférence, la structure principale 31 est reliée au pied de support 1 par quatre bielles articulées 32 réparties de part et d'autre du pied de support 1, comme représenté sur les figures 10 et 11.

Chaque bielle articulée 32 est reliée d'une part au pied de support 1 par une première liaison pivot L1 et d'autre part à la structure principale 31 par une deuxième liaison pivot L2, de manière à permettre un mouvement de translation du bras de liaison 2 par rapport au pied de support 1 selon l'axe Z. Dans cette forme de réalisation, les quatre bielles articulées 32 permettent de bloquer toute translation du bras de liaison 2 transversale à l'axe de bras W.

La structure principale 31 est en outre reliée dans cet exemple au bras de liaison 2 par une troisième liaison pivot L3 d'axe V (représenté sur la figure 10) parallèle à l'axe Z, permettant la rotation du bras de liaison 2 entre les différentes positions angulaires, dans le plan (X, Y).

Dans une forme de réalisation préférée, en référence à la figure 3, le mécanisme d'orientation 3 comprend un premier organe de préhension 35 à hauteur d'homme, configuré pour régler la position verticale du bras de liaison 2 afin de connecter/déconnecter l'extrémité de connexion 21 à la caténaire C. Le premier organe de préhension 35 permet également de débloquer le bras de liaison 2 de la position de repos P1, comme cela sera décrit plus en détail par la suite.

Dans cet exemple, le premier organe de préhension 35 se présente sous la forme d'une poignée fixée à un levier 37 relié au pied de support 1 et à une tige 38 reliée au bras de liaison 2.

La tige 38 est reliée à la structure principale 31 du mécanisme d'orientation 3, de préférence de manière articulée. Dans cet exemple, la tige 38 s'étend longitudinalement selon l'axe Z et permet de déporter le premier organe de préhension 35 à hauteur d'homme alors que le bras de liaison 2 est à hauteur de la caténaire C.

Le levier 37 est dans cet exemple relié mécaniquement au pied de support 1 par une quatrième liaison pivot L4 de manière à permettre la translation de la tige verticale 38 et donc du bras de liaison 2 selon l'axe Z, par un mouvement de rotation du levier 37 autour de l'axe pivot L4.

Dans cet exemple, le levier 37 évolue entre différentes positions angulaires autour de l'axe L4 pour permettre le positionnement du bras de liaison 2 dans les différentes positions décrites précédemment (la position de repos P1, la position de déblocage P2, la position d'indexage P3, la position d'accostage P4 et la position de raccordement P5).

En particulier, dans cet exemple, en référence aux figures 5B à 9B, le levier 37 évolue entre :
- une position intermédiaire Ql (représentée sur les figures 5B et 8B) correspondant à la position de repos P1 et à la position d'accostage P4 du bras de liaison 2, c'est-à-dire une position dans laquelle le bras de liaison 2 est positionné à la première hauteur h1 (représentées sur les figures 5B et 8B), la position intermédiaire Ql correspond dans cet exemple également à une position de repos P1 du levier 37, lorsque le bras de liaison n'est pas utilisé ;
- une position basse QB (représentée sur les figures 6B et 7B) correspondant à la position de déblocage P2 et à la position d'indexation P3 du bras de liaison 2, c'est-à-dire une position dans laquelle le bras de liaison 2 est positionné à la deuxième hauteur h2 (représentées sur les figures 6B et 7B) ;
- une position haute QH (représentée sur la figure 9B) correspondant à la position de raccordement P5 du bras de liaison 2, c'est-à-dire une position dans laquelle le bras de liaison 2 est positionné à la troisième hauteur h3 (représentée sur la figure 9B).

Comme indiqué précédemment, ce document présente l'exemple d'un levier 37 évoluant entre trois positions QB, Ql, QH, correspondant aux trois hauteurs h1, h2, h3 du bras de liaison 2, cependant il va de soi que le levier 37 pourrait présenter une quatrième position correspondant à la position de repos P1 du bras et dans laquelle le levier 37 serait placé dans une position angulaire différente des trois positions QB, Ql et QH, par exemple comprise entre la position basse QB et la position intermédiaire QI ou bien encore dans une position angulaire au-delà de la position haute QH. En particulier, le levier 37 pourrait tout aussi bien être décrit suivant un nombre de positions différentes, notamment suivant une position distincte pour chaque position P1-P5 du bras de liaison 2.

Une forme de réalisation alternative du système de raccordement S et du levier 37 est représentée sur les figures 12 et 14 à 16. Dans cette forme de réalisation, le levier 37 est configuré pour évoluer entre une position haute QH (représentée figure 14) dans laquelle le bras de liaison 2 est positionné à la deuxième hauteur h2, une position intermédiaire Ql (représentée figure 15), dans laquelle le bras de liaison 2 est positionné à la première hauteur h1, inférieure à la deuxième hauteur h2, et une position basse QB (représentée figure 16), dans laquelle le bras de liaison 2 est positionné à la troisième hauteur h3, inférieure à la première hauteur h1 et à la deuxième hauteur h2.

Dans une forme de réalisation préférée, en référence à la figure 12, le mécanisme d'orientation 3 comprend un deuxième organe de préhension 36, à hauteur d'homme, configuré pour régler la position angulaire du bras de liaison 2 autour de l'axe Z afin de positionner le bras de liaison 2 sensiblement parallèle ou perpendiculaire à la caténaire C.

Dans cet exemple, le deuxième organe de préhension 36 se présente sous la forme d'une poignée fixée à un axe vertical 39 fixé à l'extrémité de fixation du bras de liaison 2. L'axe vertical 39 permet de déporter le deuxième organe de préhension 36 de manière à la rendre accessible par l'opérateur.

Le deuxième organe de préhension 36 évolue entre une position initiale (représentée sur la figure 16), dans laquelle le deuxième organe de préhension 36 s'étend longitudinalement selon l'axe Z, dans le prolongement de l'axe vertical 39, et une position d'actionnement (représentée sur la figure 14) dans laquelle le deuxième organe de préhension 36 s'étend longitudinalement orthogonalement l'axe Z de manière à entrainer l'axe vertical 39 en rotation sur lui-même pour entrainer le bras de liaison 2 en rotation autour de l'axe vertical 39, c'est-à-dire autour de l'axe Z. En position d'entrainement, le deuxième organe de préhension 36 forme avantageusement un bras de levier.

Dans une forme de réalisation alternative, représentée sur la figure 3, le deuxième organe de préhension 36 est directement monté sur le corps principal 23 du bras de liaison 2 pour être entrainé manuellement par l'opérateur lorsque celui-ci se déplace pour faire pivoter le bras de liaison 2 autour du pied de support 1.

Dans une forme de réalisation, en référence à la figure 14, le mécanisme d'orientation 3 comprend un organe de verrouillage 5 configuré pour coopérer avec un premier verrou V1 pour verrouiller le bras de liaison 2 dans la position de repos P1 et un deuxième verrou V2 pour verrouiller le bras de liaison 2 dans la position de raccordement P5.

L'organe de verrouillage 5 se présente par exemple sous la forme d'une clé verrou fixée sur l'axe vertical 39 et insérée dans le premier verrou V1 lorsque le bras de liaison 2 est dans la position de repos P1 et dans le deuxième verrou V2 lorsque le bras de liaison 2 est dans la position de raccordement P5. Dans une forme de réalisation préférée, le deuxième verrou V2 est également configuré pour permettre la libération d'une clé autorisant l'opérateur à poursuivre une demande de procédure d'accès à une passerelle extérieure.

Dans un premier exemple, représenté sur la figure 12, le premier et le deuxième verrous V1, V2 sont fixés sur le pied de support 1. Dans un deuxième exemple, représenté sur la figure 17, le premier et le deuxième verrous V1, V2 sont fixés à une structure extérieure au droit de chaque position du bras de liaison 2.

Dans une forme de réalisation préférée, le mécanisme d'orientation 3 comprend une première butée 33, permettant de bloquer le bras de liaison 2 dans la position de raccordement P5 du bras de liaison 2, de préférence dans laquelle le bras de liaison 2 s'étend orthogonalement à la caténaire C. Lorsque le bras de liaison 2 est entrainé en rotation autour du pied de support 1, la première butée 33 permet d'empêcher le bras de liaison 2 d'être entrainé dans une position angulaire au-delà de la position de raccordement P5. Dans cet exemple, représenté sur les figures 10 et 11, la première butée 33 se présente sous la forme d'une surface plane fixe par rapport au pied de support 1 et contre laquelle l'extrémité de fixation 22 du bras de liaison 2 prend appui lorsque ce dernier est entrainé en rotation et positionné orthogonalement à la caténaire C. Dans une deuxième forme de réalisation, représentée sur la figure 12, la structure principale 31 du mécanisme d'orientation 3 comprend une patte s'étendant longitudinalement orthogonalement au pied de support 1. La patte comprend un ergo contre lequel l'extrémité de fixation 22 du bras de liaison 2 prend appui de manière similaire à la première forme de réalisation.

De préférence, le mécanisme d'orientation 3 comprend une deuxième butée 34, permettant de bloquer le bras de liaison 2 dans la position de repos P1, de manière à limiter le risque de mouvement intempestif du bras de liaison 2 par rapport au pied de support 1. Dans une première forme de réalisation, représentée sur les figures 10 et 11, l'extrémité de fixation 22 du bras de liaison 2 comprend un organe de butée 29 qui fait saillie du bras de liaison 2. L'organe de butée 29 prend appui dans la position de repos P1 contre la deuxième butée 34, confondue dans cet exemple avec la première butée 33. Dans une deuxième forme de réalisation, représentée sur les figures 12 et 13, la deuxième butée 34 se présente sous la forme d'une surface plane fixée au pied de support 1 et configurée pour s'insérer dans un logement du bras de liaison 2, de manière à le maintenir dans la position de repos P1.

Comme décrit précédemment, le système de raccordement S comprend un câble électrique 4 pour permettre le raccordement électrique de la caténaire C au rail de circulation R. Le câble électrique 4 est relié d'une part à l'extrémité de connexion 21 du bras de liaison 2 et d'autre part rail de circulation R d'une voie ferrée. Le câble électrique 4 est de préférence inséré dans le crochet formé par l'extrémité de connexion 21, de manière à être placé au contact de la caténaire C, lorsque l'extrémité de connexion 21 est placée sur la caténaire C.

Dans un exemple de réalisation, le câble électrique 4 longe le bras de liaison 2 sur lequel il est fixé par exemple au moyen de colliers.

Dans cet exemple, le câble électrique 4 est monté au moins en partie à l'intérieur du pied de support 1 formé par la poutre creuse décrite précédemment depuis l'extrémité supérieure 12 jusqu'à l'extrémité inférieur 11 pour ressortir du pied de support 1 au plus près du rail de circulation R, le câble électrique 4 étant configuré pour rester visible par l'opérateur de maintenance.

Le système de raccordement S selon l'invention permet un raccordement électrique temporaire d'une caténaire C à un rail de circulation R d'une voie ferrée, de manière à permettre une mise au rail de la caténaire C, permettant une intervention en toute sécurité. Le système de raccordement S selon l'invention permet de déporter les organes de préhension à distance de la caténaire C, permettant à l'opérateur de manipuler le bras de liaison en toute sécurité.

Dans une forme de réalisation représentée sur la figure 17, le système de raccordement S est monté sur une structure permettant l'élévation et la sécurisation de l'opérateur. Une telle structure peut se présenter sous la forme d'une plateforme d'accès N, connue de l'homme du métier sous la désignation de passerelle d'accès toiture, comprenant un ensemble de poutres auxquelles les extrémités inférieure 11 et supérieure 12 du pied de support 1 sont reliées. La plateforme d'accès N permet d'assurer la protection de l'opérateur tout en permettant de l'élever au-dessus du sol, de manière à lui permettre d'atteindre une caténaire située à une autre plus élevée. Une telle configuration permet également l'utilisation d'un pied de support 1 moins haut.

Il va dorénavant être présenté un procédé de raccordement électrique temporaire d'une caténaire C à un rail de circulation R d'une voie ferrée, au moyen du système de raccordement S tel que décrit précédemment, en référence aux figures 5A à 9B.

Dans ce procédé, le système de raccordement S a été préalablement installé et fixé par exemple sur un lieu d'intervention. Dans cet exemple, l'extrémité inférieure 11 du pied de support 1 a été préalablement fixée au sol (ou sur un socle d'une structure) à proximité de la caténaire C. De préférence, l'extrémité inférieure 11 a été fixée à une distance suffisante pour permettre un raccordement à distance en toute sécurité, par exemple à une distance comprise entre 2500 et 4500 mm, correspondant à la longueur du bras de liaison 2. Une telle distance permet ainsi au système de raccordement S de ne pas entrer en contact de manière intempestive avec des éléments ferroviaires présents sur la zone de l'intervention. L'extrémité supérieure 12 du pied de support 1 a été préalablement fixée sur une charpente d'une structure fixe par exemple à une poutre existante. Aussi, le système de raccordement S est fixe par rapport à la caténaire C.

De plus, dans cet exemple, le bras de liaison 2 est initialement positionné dans la position de repos P1, dans laquelle il se trouve sensiblement parallèle à la caténaire C et positionné à la première hauteur h1, comme cela est représenté sur les figures 5A et 5B. Le levier 38 du mécanisme d'orientation 3 se trouve initialement dans la position intermédiaire Ql, correspondant dans cet exemple également à une position de repos. Enfin, l'hypothèse est faite que l'organe de verrouillage 5 se trouve initialement inséré dans le premier verrou V1 pour bloquer le bras de liaison dans la position de repos P1.

Le procédé comprend une première étape de déverrouillage du premier verrou V1, c'est-à-dire de retrait de l'organe de verrouillage 5 du premier verrou V1, de manière à libérer le bras de liaison 2.

L'opérateur se saisit du premier organe de préhension 35 dans une deuxième étape pour entrainer le levier 37 depuis la position intermédiaire QI jusqu'à la position basse QB, comme représenté sur les figures 6A et 6B. Le bras de liaison 2 est alors entrainé en translation selon l'axe Z depuis la position de repos P1 dans la position de déblocage P2. Le bras de liaison 2 est ainsi libéré de la deuxième butée 34 et placé, dans cette deuxième étape, verticalement jusqu'à la deuxième hauteur h2.

L'opérateur se saisit ensuite du deuxième organe de préhension 36 dans une troisième étape de rotation Er, pour entrainer le bras de liaison 2 en rotation autour de l'axe Z depuis la position de déblocage P2 jusqu'à la position d'indexage P3, de manière à placer l'extrémité de connexion 21 du bras de liaison 2 au-dessus de la caténaire C, comme cela est représenté sur les figures 7A et 7B. Autrement dit, l'extrémité de connexion 21 et la caténaire C sont alignées verticalement.

Lorsque le bras de liaison 2 est placé au-dessus de la caténaire C, l'opérateur saisit à nouveau le premier organe de préhension 35 pour lever le levier 37 depuis la position basse QB jusqu'à la position intermédiaire Ql, dans une quatrième étape de translation Ed, comme cela est représenté sur les figures 8A et 8B. Le bras de liaison 2 est alors entrainé en translation selon l'axe Z depuis la position d'indexage P3 dans la position d'accostage P4. Le bras de liaison 2 est placé, dans cette quatrième étape, verticalement jusqu'à la première hauteur h1, inférieure à la deuxième hauteur h2, de manière à mettre en contact l'extrémité de connexion 21 avec la caténaire C.

Dans une cinquième étape, l'opérateur lève une nouvelle fois le levier 37 depuis la position intermédiaire QI jusqu'à la position haute QH, comme cela est représenté sur les figures 9A et 9B. Le bras de liaison 2 est alors entrainé en translation selon l'axe Z depuis la position d'accostage P4 jusqu'à la position de raccordement P5. Le bras de liaison 2 est placé, dans cette cinquième étape, verticalement jusqu'à la troisième hauteur h3, inférieure à la première hauteur h1. Le bras de liaison 2 applique ainsi un effort de compression F sur la caténaire C, de manière à s'assurer du contact entre le câble électrique monté dans l'extrémité de connexion 21 du bras de liaison 2 et la caténaire C. Il va de soi que l'opérateur pourrait tout aussi bien lever le levier 37, dans une même étape du procédé, directement depuis la position basse QB vers la position haute QH pour permettre la translation selon l'axe Z du bras de liaison 2 directement depuis la position d'indexage P3 dans la position de raccordement P5.

L'opérateur insère ensuite, dans une sixième étape de verrouillage Ev, représentée sur la figure 16, l'organe de verrouillage 5 dans le deuxième verrou V2 pour empêcher la rotation intempestive du bras de liaison 2 autour du pied de support 1. Dans cette sixième étape, l'opérateur récupère également une clé afin de permettre une procédure d'accès à la passerelle.

Un tel procédé de raccordement permet avantageusement la mise en place du dispositif de raccordement sur la caténaire C en toute sécurité depuis le sol par exemple. L'opérateur peut alors effectuer toutes ces opérations sans pénibilité et en toute sécurité.

## Revendications

1. Système de raccordement (S) électrique temporaire d'une caténaire (C) à un rail de circulation (R) d'une voie ferrée, le système de raccordement (S) comprenant :
- un pied de support (1) s'étendant verticalement selon un axe Z,
- un bras de liaison (2) comprenant une extrémité de connexion (21) électrique configurée pour être reliée mécaniquement à la caténaire (C) et une extrémité de fixation (22) reliée au pied de support (1) par un mécanisme d'orientation (3), le bras de liaison (2) étant configuré pour évoluer au moins entre une position de repos (P1) et une position de raccordement (P5) à la caténaire (C), et
- un câble électrique (4) relié, d'une part, à l'extrémité de connexion (21) du bras de liaison (2) et configuré pour être relié, d'autre part, au rail de circulation (R) d'une voie ferrée,
le système de raccordement (S) **étant caractérisé en ce que** le mécanisme d'orientation (3) est configuré pour régler la position angulaire du bras de liaison (2) autour de l'axe Z de manière à positionner l'extrémité de connexion (21) au-dessus de la caténaire (C) et pour régler la position verticale du bras de liaison (2) afin de déconnecter/connecter l'extrémité de connexion (21) à la caténaire (C).

2. Système de raccordement (S) selon la revendication 1, dans lequel le mécanisme d'orientation (3) comprend une structure principale (31) reliée au pied de support (1) par l'intermédiaire d'une pluralité de bielles articulées (32) de manière à permettre une translation circulaire de la structure principale (31) par rapport au pied de support (1).

3. Système de raccordement (S) selon la revendication 2, dans lequel la structure principale (31) du mécanisme d'orientation (3) est articulée avec le bras de liaison (2) de manière à permettre la rotation du bras de liaison (2) autour de l'axe Z.

4. Système de raccordement (S) selon l'une des revendications 1 à 3, dans lequel le bras de liaison (2) s'étendant selon un axe de bras (W) et comprenant un corps principal (23) relié au mécanisme d'orientation (3), un dispositif de raccordement (24) comportant l'extrémité de connexion (21), et un dispositif de réglage (25) reliant le dispositif de raccordement (24) au corps principal (23), le bras de liaison (2) comporte des premiers moyens de réglage (28) de l'écartement axial du dispositif de raccordement (24) par rapport au dispositif de réglage (25) selon l'axe de bras (W).

5. Système de raccordement (S) selon la revendication 4, dans lequel le bras de liaison (2) comporte des deuxièmes moyens de réglage (26, 27) de la position angulaire du dispositif de réglage (25) par rapport au corps principal (23), de manière à modifier l'inclinaison du bras de liaison (2).

6. Système de raccordement (S) selon l'une des revendications 1 à 5, dans lequel le mécanisme d'orientation (3) comprend une première butée (33), configurée pour bloquer le bras de liaison (2) dans la position de raccordement (P5), de préférence dans laquelle le bras de liaison (2) s'étend orthogonalement à la caténaire (C).

7. Système de raccordement (S) selon l'une des revendications 1 à 6, dans lequel le mécanisme d'orientation (3) comprend un premier organe de préhension (36), à hauteur d'homme, configuré pour régler la position verticale du bras de liaison (2) afin de connecter/déconnecter l'extrémité de connexion (21) à la caténaire (C).

8. Système de raccordement (S) selon l'une des revendications 1 à 7, dans lequel le mécanisme d'orientation (3) comprend un deuxième organe de préhension (37), à hauteur d'homme, configuré pour régler la position angulaire du bras de liaison (2) autour de l'axe Z.

9. Système de raccordement (S) selon l'une des revendications 1 à 8, dans lequel le pied de support (1) se présentant sous la forme d'une poutre creuse, le câble électrique (4) est monté, au moins en partie, à l'intérieur du pied de support (1).

10. Procédé de raccordement électrique temporaire d'une caténaire (C) à un rail de circulation (R) d'une voie ferrée, le procédé étant réalisé au moyen du système de raccordement (S) selon l'une des revendications 1 à 9, le pied de support (1) s'étendant verticalement selon l'axe Z, étant fixe par rapport à la caténaire (C), le bras de liaison (2) étant initialement dans la position de repos (P1) dans laquelle il n'est pas situé au droit de la caténaire (C), le câble électrique (4) étant relié au rail de circulation (R) d'une voie ferrée, le procédé comprend :
- une étape de rotation (Er) du bras de liaison (2) autour de l'axe Z, de manière à positionner l'extrémité de connexion (21) du bras de liaison (2) au droit de la caténaire (C), de manière à aligner verticalement l'extrémité de connexion (21) et la caténaire (C), et
- une étape de translation (Ed) du bras de liaison (2) selon l'axe Z, de manière à mettre en contact l'extrémité de connexion (21) et la caténaire (C).

11. Procédé de raccordement selon la revendication 10, comprenant postérieurement à l'étape de translation (Ed), une étape de verrouillage (Ev) du bras de liaison (2) dans la position de raccordement (P5).

## Patentansprüche

1. System zur vorübergehenden elektrischen Verbindung (S) einer Oberleitung (C) mit einer Fahrschiene (R) eines Eisenbahngleises, wobei das Verbindungssystem (S) umfasst:
- einen Stützfuß (1), der sich vertikal gemäß einer Achse Z erstreckt,
- einen Verbindungsarm (2), der ein elektrisches Anschlussende (21) umfasst, das ausgelegt ist, um mit der Oberleitung (C) mechanisch verbunden zu sein, und ein Befestigungsende (22), das mit dem Stützfuß (1) durch einen Orientierungsmechanismus (3) verbunden ist, wobei der Verbindungsarm (2) ausgelegt ist, um sich mindestens zwischen einer Ruhestellung (P1) und einer Verbindungsstellung (P5) an der Oberleitung (C) zu bewegen, und
- ein Stromkabel (4), das zum einem mit dem Anschlussende (21) des Verbindungsarms (2) verbunden und ausgelegt ist, um zum anderen mit der Fahrschiene (R) eines Eisenbahngleises verbunden zu sein,
wobei das Verbindungssystem (S) **dadurch gekennzeichnet ist, dass** der Orientierungsmechanismus (3) ausgelegt ist, um die Winkelposition des Verbindungsarms (2) um die Achse Z derart einzustellen, dass das Anschlussende (21) über der Oberleitung (C) positioniert wird und um die vertikale Position des Verbindungsarms (2) einzustellen, um das Anschlussende (21) von der Oberleitung (C) zu lösen/mit ihr zu verbinden.

2. Verbindungssystem (S) nach Anspruch 1, wobei der Orientierungsmechanismus (3) eine Hauptstruktur (31) umfasst, die mit dem Stützfuß (1) über eine Vielzahl von Gelenkstangen (32) derart verbunden ist, dass eine kreisförmige Translation der Hauptstruktur (31) im Verhältnis zum Stützfuß (1) ermöglicht wird.

3. Verbindungssystem (S) nach Anspruch 2, wobei die Hauptstruktur (31) des Orientierungsmechanismus (3) mit dem Verbindungsarm (2) derart gelenkig verbunden ist, dass die Rotation des Verbindungsarms (2) um die Achse Z ermöglicht wird.

4. Verbindungssystem (S) nach einem der Ansprüche 1 bis 3, wobei sich der Verbindungsarm (2) in einer Armachse (W) erstreckt und einen Hauptkörper (23) umfasst, der mit dem Orientierungsmechanismus (3) verbunden ist, wobei eine Verbindungsvorrichtung (24) das Anschlussende (21) aufweist, und eine Einstellvorrichtung (25) die Verbindungsvorrichtung (24) mit dem Hauptkörper (23) verbindet, wobei der Verbindungsarm (2) erste Einstellmittel (28) des axialen Abstands der Verbindungsvorrichtung (24) im Verhältnis zur Einstellvorrichtung (25) gemäß der Armachse (W) aufweist.

5. Verbindungssystem (S) nach Anspruch 4, wobei der Verbindungsarm (2) zweite Einstellmittel (26, 27) der Winkelposition der Einstellvorrichtung (25) im Verhältnis zum Hauptkörper (23) derart aufweist, dass die Neigung des Verbindungsarms (2) verändert wird.

6. Verbindungssystem (S) nach einem der Ansprüche 1 bis 5, wobei der Orientierungsmechanismus (3) einen ersten Anschlag (33) umfasst, der ausgelegt ist, um den Verbindungsarm (2) in der Verbindungsstellung (P5) zu arretieren, vorzugsweise in derjenigen, in der sich der Verbindungsarm (2) orthogonal zur Oberleitung (C) erstreckt.

7. Verbindungssystem (S) nach einem der Ansprüche 1 bis 6, wobei der Orientierungsmechanismus (3) ein erstes Greiforgan (36) mannshoch umfasst, das ausgelegt ist, um die vertikale Position des Verbindungsarms (2) einzustellen, um das Anschlussende (21) von der Oberleitung (C) zu lösen/mit ihr zu verbinden.

8. Verbindungssystem (S) nach einem der Ansprüche 1 bis 7, wobei der Orientierungsmechanismus (3) ein zweites Greiforgan (37) mannshoch umfasst, das ausgelegt ist, um die Winkelposition des Verbindungsarms (2) um die Achse Z einzustellen.

9. Verbindungssystem (S) nach einem der Ansprüche 1 bis 8, wobei der Stützfuß (1) in Form eines hohlen Balkens vorliegt, wobei das Stromkabel (4) zumindest zum Teil im Inneren des Stützfußes (1) angebracht ist.

10. Verfahren zur vorübergehenden elektrischen Verbindung einer Oberleitung (C) mit einer Fahrschiene (R) eines Eisenbahngleises, wobei das Verfahren mittels des Verbindungssystems (S) nach einem der Ansprüche 1 bis 9 durchgeführt wird, wobei sich der Stützfuß (1) vertikal in der Achse Z erstreckt, wobei er im Verhältnis zur Oberleitung (C) fest ist, wobei der Verbindungsarm (2) anfänglich in der Ruhestellung (P1) ist, in welcher er sich nicht im rechten Winkel zur Oberleitung (C) befindet, wobei das Stromkabel (4) mit der Fahrschiene (R) eines Eisenbahngleises verbunden ist, wobei das Verfahren umfasst:
- einen Rotationsschritt (Er) des Verbindungsarms (2) um die Achse Z derart, dass das Anschlussende (21) des Verbindungsarms (2) im rechten Winkel zur Oberleitung (C) derart positioniert wird, dass das Anschlussende (21) und die Oberleitung (C) vertikal fluchten, und
- einen Translationsschritt (Ed) des Verbindungsarm (2) in der Achse Z derart, dass das Anschlussende (21) und die Oberleitung (C) in Kontakt versetzt werden.

11. Verbindungsverfahren nach Anspruch 10, das nach dem Translationsschritt (Ed) einen Verriegelungsschritt (Ev) des Verbindungsarms (2) in der Verbindungsstellung (P5) umfasst.

## Claims

1. A connection system (S) for temporarily electrically connecting a catenary (C) to a circulation rail (R) of a railway, the connection system (S) comprising:
- a support leg (1) extending vertically along an axis Z,
- a linking arm (2) comprising an electrical connection end (21) configured to be mechanically connected to the catenary (C) and a fastening end (22) connected to the support leg (1) by a steering mechanism (3), the linking arm (2) being configured to transition at least between a resting position (P1) and a connection position (P5) for connecting to the catenary (C), and
- an electrical cable (4) connected, on the one hand, to the connection end (21) of the linking arm (2) and configured to be connected, on the other hand, to the circulation rail (R) of a railway,
the connection system (S) being **characterised in that** the steering mechanism (3) is configured to adjust the angular position of the linking arm (2) about the axis Z so as to position the connection end (21) above the catenary (C) and to adjust the vertical position of the linking arm (2) in order to disconnect/connect the connection end (21) from/to the catenary (C).

2. The connection system (S) according to claim 1, wherein the steering mechanism (3) comprises a main structure (31) connected to the support leg (1) via a plurality of hinged connecting rods (32) so as to allow circular translation of the main structure (31) relative to the support leg (1).

3. The connection system (S) according to claim 2, wherein the main structure (31) of the steering mechanism (3) is hinged with the linking arm (2) so as to allow rotation of the linking arm (2) about the axis Z.

4. The connection system (S) according to one of claims 1 to 3, wherein the connection arm (2) extending along an arm axis (W) and comprising a main body (23) connected to the steering mechanism (3), a connection device (24) including the connection end (21), and an adjustment device (25) connecting the connection device (24) to the main body (23), the linking arm (2) includes first means for adjusting (28) the axial spacing of the connection device (24) relative to the adjustment device (25) along the arm axis (W).

5. The connection system (S) according to claim 4, wherein the linking arm (2) includes second means for adjusting (26, 27) the angular position of the adjustment device (25) relative to the main body (23), so as to modify inclination of the linking arm (2).

6. The connection system (S) according to one of claims 1 to 5, wherein the steering mechanism (3) comprises a first stop (33), configured to block the linking arm (2) in the connection position (P5), preferably wherein the linking arm (2) extends orthogonally to the catenary (C).

7. The connection system (S) according to one of claims 1 to 6, wherein the steering mechanism (3) comprises a first gripping member (36), at human height, configured to adjust the vertical position of the linking arm (2) in order to connect/disconnect the connection end (21) to/from the catenary (C).

8. The connection system (S) according to one of claims 1 to 7, wherein the steering mechanism (3) comprises a second gripping member (37), at human height, configured to adjust the angular position of the linking arm (2) about the axis Z.

9. The connection system (S) according to one of claims 1 to 8, wherein the support leg (1) being in the form of a hollow beam, the electrical cable (4) is mounted, at least in part, inside the support leg (1).

10. A method for temporarily electrically connecting a catenary (C) to a circulation rail (R) of a railway, the method being performed by means of the connection system (S) according to one of claims 1 to 9, the support leg (1) extending vertically along the axis Z, being fixed relative to the catenary (C), the linking arm (2) being initially in the resting position (P1) in which it is not located at right angles to the catenary (C), the electrical cable (4) being connected to the circulation rail (R) of a railway, the method comprises:
- a step of rotating (Er) the linking arm (2) about the axis Z, so as to position the connection end (21) of the linking arm (2) at right angles to the catenary (C), so as to vertically align the connection end (21) and the catenary (C), and
- a step of translating (Ed) the linking arm (2) along the axis Z, in order to bring the connection end (21) and the catenary (C) into contact.

11. The connection method according to claim 10, comprising subsequently to the translation step (Ed), a step of locking (Ev) the linking arm (2) in the connection position (P5).
